# EUROPÄISCHE PATENTSCHRIFT

(11) **EP 3 286 774 B1**
(45) Veröffentlichungstag und Bekanntmachung des Hinweises auf die Patenterteilung: **27.11.2019**
(21) Anmeldenummer: 16716043.1
(22) Anmeldetag: 13.04.2016
(51) Int. Cl.: H01H 9/00, H01F 29/04, H01H 33/664

(54) **LASTSTUFENSCHALTER, VERFAHREN ZUR BETÄTIGUNG EINES LASTSTUFENSCHALTERS SOWIE ELEKTRISCHE ANLAGE MIT LASTSTUFENSCHALTER**
ON-LOAD TAP CHANGER, A METHOD OF OPERATING AN ON-LOAD TAP CHANGER AND ELECTRIC SYSTEM WITH AN ON-LOAD TAP CHANGER
CHANGEUR DE PRISES EN CHARGE, PROCÉDÉ D'ACTIONNEMENT D'UN CHANGEUR DE PRISES EN CHARGE ET INSTALLATION ÉLECTRIQUE LE COMPRENANT

(30) Priorität: 22.04.2015 DE 102015106178
(43) Veröffentlichungstag der Anmeldung: 28.02.2018
(73) Patentinhaber: Maschinenfabrik Reinhausen GmbH, 93059 Regensburg (DE)
(72) Erfinder: BIERINGER, Alfred, 94333 Geiselhöring (DE); HAMMER, Christian, 93059 Regensburg (DE); HURM, Christian, 93180 Deuerling (DE); SACHSENHAUSER, Andreas, 84066 Mallersdorf-Pfaffenberg (DE)
(86) Internationale Anmeldenummer: PCT/EP2016/058119
(87) Internationale Veröffentlichungsnummer: WO 2016/169826

(56) Entgegenhaltungen:
- EP-A2- 0 907 193
- WO-A1-2012/134947
- DE-A1- 2 242 318
- DE-A1-102009 048 813
- DE-A1-102013 109 289
- GB-A- 1 114 868
- US-A- 6 060 669
- US-A1- 2014 167 529

## Beschreibung

Die Erfindung betrifft einen Laststufenschalter zur unterbrechungslosen Umschaltung zwischen Wicklungsanzapfungen einer Regelwicklung, ein Verfahren zur Betätigung eines Laststufenschalters sowie eine elektrische Anlage mit einer Regelwicklung und einem Laststufenschalter.

US 6,060,669 betrifft einen Stufenschalter nach dem Reaktorschaltprinzip zur unterbrechungslosen Lastumschaltung zwischen Wicklungsanzapfungen eines Stufentransformators. Der Stufenschalter weist zwei Lastzweige auf, die in zwei stationären Stellungen des Stufenschalters die Wicklungsanzapfungen über Wählerkontakte und Überschaltimpedanzen, die als Wicklungen ausgebildet sind, mit der Lastableitung verbinden und folglich den Laststrom führen.

DE 10 2009 048 813 A1 beschreibt einen Stufenschalter zur unterbrechungslosen Umschaltung zwischen Wicklungsanzapfungen eines Stufentransformators. Der Stufenschalter weist zwei Lastzweige auf, von denen jeder eine als Hauptkontakt wirkende Vakuumschaltröhre und parallel dazu eine Reihenschaltung aus einem Überschaltwiderstand und einer Vakuumschaltröhre aufweist. Über die Lastzweige können die Wicklungsanzapfungen mit einer gemeinsamen Lastableitung verbunden werden. Zwischen den Vakuumschaltröhren der beiden Lastzweige und der Lastableitung sind mechanische Schaltelemente angeordnet, die als zusätzliche Trennschalter dienen. Durch die mechanischen Schaltelemente ist es möglich, in einem nicht den Laststrom führenden Lastzweig die jeweilige Vakuumschaltröhre galvanisch von der Lastableitung zu trennen und damit die Stoßspannungsfestigkeit des Stufenschalters zu erhöhen.

Vor diesem Hintergrund schlägt die Erfindung die Gegenstände der unabhängigen Ansprüche vor. Vorteilhafte Weiterbildungen und Ausführungsformen der Erfindung sind in den abhängigen Ansprüchen beschrieben.

Die Erfindung schlägt gemäß einem ersten Aspekt einen Laststufenschalter zur unterbrechungslosen Umschaltung zwischen Wicklungsanzapfungen einer Regelwicklung vor, umfassend
- einen Umschalter, der einen ersten Umschaltkontakt, einen zweiten Umschaltkontakt und einen dritten Umschaltkontakt umfasst und eine erste Stellung, in der der erste und dritte Umschaltkontakt verbunden sind, eine zweite Stellung, in der der zweite und dritte Umschaltkontakt verbunden sind, und eine Brückungsstellung einnehmen kann, in der die Umschaltkontakte verbunden sind;
- einen ersten Festkontakt, der an eine zugeordnete erste Wicklungsanzapfung angeschlossen ist oder werden kann oder sein kann;
- einen zweiten Festkontakt, der an eine zugeordnete zweite Wicklungsanzapfung angeschlossen ist oder werden kann oder sein kann;
- einen ersten Bewegtkontakt, der wahlweise jeden der Festkontakte kontaktieren kann;
- einen zweiten Bewegtkontakt, der wahlweise jeden der Festkontakte kontaktieren kann;
- einen Hauptzweig, der den ersten Bewegtkontakt direkt mit dem ersten Umschaltkontakt verbindet,
- einen Hilfszweig, der den zweiten Bewegtkontakt über ein strombegrenzendes Element mit dem zweiten Umschaltkontakt verbindet;
- ein Schaltelement, das zwischen den Hauptzweig und den zweiten Umschaltkontakt geschaltet ist,
- wobei die Bewegtkontakte unabhängig voneinander betätigbar sind.

Dieser Laststufenschalter ermöglicht durch die zwei Festkontakte, von denen jeder an eine zugeordnete Wicklungsanzapfung angeschlossen ist, dass beide Bewegtkontakte einen Festkontakt, also eine Wicklungsanzapfung, gleichzeitig kontaktieren. Damit liegt der gesamte Laststufenschalter auf einem definierten Potential und weist damit eine hohe Stoßspannungsfestigkeit auf. Weiterhin werden keine spannungsbegrenzenden Elemente, wie beispielsweise Varistoren, benötigt.

Dieser Laststufenschalter weist mit wenigen mechanischen Schaltkontakten und Vakuumschaltröhren eine hohe Stoßspannungsfestigkeit auf und ist dabei kostengünstig und sicher.

Dieser Laststufenschalter kann nach Bedarf auf beliebige Art und Weise ausgebildet sein, beispielsweise
- als Lastwähler oder derart, dass er wenigstens einen Lastumschalter und wenigstens einen Wähler umfasst; und/oder
- derart, dass er wenigstens einen oder keinen zusätzlichen Umschalter und/oder wenigstens einen oder keinen zusätzlichen Festkontakt und/oder wenigstens einen oder keinen zusätzlichen Bewegtkontakt und/oder wenigstens einen oder keinen zusätzlichen Hauptzweig und/oder wenigstens einen oder keinen zusätzlichen Hilfszweig und/oder wenigstens ein oder kein zusätzliches Schaltelement umfasst.

Die Bewegtkontakte können nach Bedarf auf beliebige Art und Weise ausgebildet sein, beispielsweise als Kontakte, die linear oder rotatorisch in genau oder wenigstens einer Ebene bewegt werden können. Die Bewegtkontakte können als Wählerkontakte eines Feinwählers ausgebildet sein.

Erfindungsgemäß ist spezifiziert, dass
- der Hauptzweig, der den ersten Bewegtkontakt direkt mit dem ersten Umschaltkontakt verbindet;
- das strombegrenzende Element als Widerstand ausgebildet ist;
- die Bewegtkontakte unabhängig voneinander betätigbar sind.

Vorzugsweise ist spezifiziert, dass
- der Umschalter als brückender Umschalter ausgebildet ist und einen beweglichen ersten Mittelkontakt umfasst, der mit dem dritten Umschaltkontakt verbunden ist;
- in der ersten Stellung der Mittelkontakt den ersten Umschaltkontakt kontaktiert, in der zweiten Stellung der Mittelkontakt den zweiten Umschaltkontakt kontaktiert und in der Brückungsstellung der Mittelkontakt den ersten und zweiten Umschaltkontakt kontaktiert.

Dabei kann der brückende Umschalter als Drehschalter, bei dem der bewegliche Mittelkontakt gedreht wird, oder Zugschalter, bei dem der bewegliche Mittelkontakt gezogen bzw. gedrückt wird, ausgebildet sein.

Vorteilhafterweise kontaktiert der Mittelkontakt in der ersten Stellung nicht den zweiten Umschaltkontakt und in der zweiten Stellung nicht den ersten Umschaltkontakt. Vorzugsweise ist spezifiziert, dass
- der Umschalter einen beweglichen ersten Mittelkontakt, der mit dem dritten Umschaltkontakt verbunden ist, und einen beweglichen zweiten Mittelkontakt umfasst, der mit dem dritten Umschaltkontakt verbunden ist;
- in der ersten Stellung der erste und/oder zweite Mittelkontakt den ersten Umschaltkontakt kontaktiert, in der zweiten Stellung der zweite und/oder erste Mittelkontakt den zweiten Umschaltkontakt kontaktiert und in der Brückungsstellung der erste Mittelkontakt den ersten Umschaltkontakt und der zweite Mittelkontakt den zweiten Umschaltkontakt kontaktiert.

Der Umschalter mit zwei Mittelkontakten erreicht die Brückungsstellung, indem einer der Mittelkontakte den ersten Umschaltkontakt und der andere Mittelkontakt den zweiten Umschaltkontakt kontaktiert. In einer ersten bzw. zweiten Stellung muss mindestens einer der Mittelkontakte den ersten bzw. zweiten Umschaltkontakt kontaktieren.

Vorteilhafterweise kontaktieren die Mittelkontakte in der ersten Stellung nicht den zweiten Umschaltkontakt und in der zweiten Stellung nicht den ersten Umschaltkontakt.

Vorzugsweise ist spezifiziert, dass das strombegrenzende Element wenigstens einen Widerstand und/oder wenigstens eine Induktivität und/oder wenigstens einen Varistor umfasst.

Vorzugsweise ist spezifiziert, dass das Schaltelement als Vakuumschaltröhre, Ölschaltstrecke oder Halbleiterschaltelement, das beispielsweise ein IGBT oder Thyristor sein kann, ausgebildet ist.

Vorzugsweise ist spezifiziert, dass
- jeder Festkontakt wenigstens zwei Kontaktflächen aufweist;
- bei jedem Festkontakt die erste Kontaktfläche dem ersten Bewegtkontakt und die zweite Kontaktfläche dem zweiten Bewegtkontakt zugeordnet ist.

Die Kontaktflächen können auf beliebige Art und Weise ausgebildet sein und beispielsweise in einer gemeinsamen Ebene oder in unterschiedlichen Ebenen liegen und/oder in dieselbe Richtung oder in unterschiedliche Richtungen ragen und/oder ein- oder mehrteilig ausgebildet sein.

Vorzugsweise ist spezifiziert, dass der dritte Umschaltkontakt an eine Lastableitung angeschlossen ist oder werden kann oder sein kann.

Die Erfindung schlägt gemäß einem zweiten Aspekt ein Verfahren zur Betätigung eines Laststufenschalters vor, der wenigstens einen ersten und zweiten Bewegtkontakt und wenigstens einen ersten und zweiten Festkontakt umfasst, wobei
- von einem ersten stationären Zustand, in dem die Bewegtkontakte den ersten Festkontakt kontaktieren, zu einem zweiten stationären Zustand, in dem die Bewegtkontakte den zweiten Festkontakt kontaktieren, umgeschaltet wird.

Dieses Verfahren ermöglicht, dass der Laststufenschalter im stationären Zustand auf einem definierten Potential liegt, da die einzelnen Bewegtkontakte einen Festkontakt einer gemeinsamen Wicklungsanzapfung kontaktieren.

Dieses Verfahren bietet mit wenigen mechanischen Schaltkontakten und Vakuumschaltröhren eine hohe Stoßspannungsfestigkeit und ist dabei kostengünstig und sicher.

Der Laststufenschalter kann nach Bedarf auf beliebige Art und Weise ausgebildet sein, beispielsweise wie einer der gemäß dem ersten Aspekt vorgeschlagenen Laststufenschalter und/oder als Teil einer der gemäß dem dritten Aspekt vorgeschlagenen Anlagen.

Vorzugsweise ist spezifiziert, dass
- der zweite Bewegtkontakt von dem ersten Festkontakt getrennt und mit dem zweiten Festkontakt kontaktiert wird;
- ein Laststrom von einem Hauptzweig auf einen Hilfszweig umgeschaltet wird;
- der erste Bewegtkontakt von dem ersten Festkontakt getrennt und mit dem zweiten Festkontakt kontaktiert wird.

Nachdem beide Bewegtkontakte den zweiten Festkontakt kontaktiert haben, kann der Laststrom vom Hilfszweig auf den Hauptzweig umgeschaltet werden.

Vorzugsweise ist spezifiziert, dass
- der erste Bewegtkontakt von dem ersten Festkontakt getrennt und mit dem zweiten Festkontakt kontaktiert wird;
- der Laststrom von einem Hilfszweig auf einen Hauptzweigumgeschaltet wird;
- der zweite Bewegtkontakt von dem ersten Festkontakt getrennt und mit dem zweiten Festkontakt kontaktiert wird.

Bevor der erste Bewegtkontakt von dem ersten Festkontakt getrennt wird und mit dem zweiten Festkontakt kontaktiert, kann der Laststrom vom Hauptzweig auf den Hilfszweig umgeschaltet werden.

Vorzugsweise ist spezifiziert, dass das Umschalten des Laststroms mittels eines Umschalters und eines Schaltelements erfolgt.

Der Umschalter ist bevorzugt wie der Umschalter in einem der vorgeschlagenen Laststufenschalter ausgebildet. Das Schaltelement ist bevorzugt wie das Schaltelement in einem der vorgeschlagenen Laststufenschalter ausgebildet.

Vorzugsweise ist spezifiziert, dass der Umschalter nur dann betätigt wird, wenn das Schaltelement geschlossen ist.

Vorzugsweise ist spezifiziert, dass
- der Umschalter einen ersten, zweiten und dritten Umschaltkontakt umfasst und eine erste Stellung, in der der erste und dritte Umschaltkontakt verbunden sind, eine zweite Stellung, in der der zweite und dritte Umschaltkontakt verbunden sind, und eine Brückungsstellung einnehmen kann, in der die Umschaltkontakte verbunden sind;
- vor dem Bewegen des ersten Bewegtkontaktes das Schaltelement geöffnet wird und der Umschalter die zweite Stellung einnimmt oder in diese Stellung geschaltet wird, wobei dabei insbesondere der Laststrom vom Hauptzweig auf den Hilfszeig geschaltet wird und/oder vor dem Bewegen des zweiten Bewegtkontaktes das Schaltelement geöffnet wird und der Umschalter die erste Stellung einnimmt oder in diese Stellung geschaltet wird, wobei dabei insbesondere der Laststrom vom Hilfszweig auf den Hauptzeig geschaltet wird.

Vorzugsweise ist spezifiziert, dass
- in einem Schritt a das Schaltelement geöffnet wird oder bleibt oder offen ist und der Umschalter die erste Stellung einnimmt oder in diese Stellung geschaltet wird;
- in einem Schritt b der zweite Bewegtkontakt vom ersten Festkontakt getrennt und mit dem zweiten Festkontakt kontaktiert wird;
- in einem Schritt c das Schaltelement geschlossen wird und der Hilfszweig, der den zweiten Bewegtkontakt über ein strombegrenzendes Element mit dem zweiten Umschaltkontakt verbindet, über das Schaltelement mit dem Hauptzweig, der den ersten Bewegtkontakt mit dem ersten Umschaltkontakt verbindet, verbunden wird;
- in einem Schritt d der Umschalter in die Brückungsstellung geschaltet wird;
- in einem Schritt e der Umschalter in die zweite Stellung geschaltet wird;
- in einem Schritt f das Schaltelement geöffnet wird und der Hilfszweig durch das Schaltelement vom Hauptzweig getrennt wird;
- in einem Schritt g der erste Bewegtkontakt vom ersten Festkontakt getrennt und mit dem zweiten Festkontakt kontaktiert wird;
- in einem Schritt h das Schaltelement geschlossen wird und der Hilfszweig über das Schaltelement mit dem Hauptzweig verbunden wird;
- in einem Schritt i der Umschalter in die Brückungsstellung geschaltet wird;
- in einem Schritt j der Umschalter in die erste Stellung geschaltet wird.

Vorzugsweise ist spezifiziert, dass
- in einem Schritt k nach Schritt j das Schaltelement geöffnet wird.

Die Erfindung schlägt gemäß einem dritten Aspekt eine elektrische Anlage vor, umfassend
- eine Regelwicklung;
- einen Laststufenschalter, der an die Regelwicklung angeschlossen ist und wie einer der gemäß dem ersten Aspekt vorgeschlagenen Laststufenschalter ausgebildet ist.

Diese Anlage weist mit wenigen mechanischen Schaltkontakten und Vakuumschaltröhren eine hohe Stoßspannungsfestigkeit auf und ist dabei kostengünstig und sicher.

Diese Anlage kann nach Bedarf auf beliebige Art und Weise ausgebildet sein, beispielsweise
- als Kompensationsdrossel zum Beeinflussen von Blindleistung in einem Wechselstromnetz oder als Ortsnetztransformator oder Leistungstransformator oder Regeltransformator oder Phasenschiebertransformator oder Stromrichtertransformator oder Blindleistungskompensationsanlage; und/oder
- derart, dass sie wenigstens eine oder keine zusätzliche Regelwicklung und/oder wenigstens einen oder keinen zusätzlichen Laststufenschalter und/oder wenigstens eine Stammwicklung umfasst.

Mit jedem der vorgeschlagenen Laststufenschalter und jeder der vorgeschlagenen Anlagen kann beispielsweise eines der vorgeschlagenen Verfahren durchgeführt werden.

Vorzugsweise kann jeder der vorgeschlagenen Laststufenschalter derart ausgebildet sein und/oder dazu dienen und/oder dafür geeignet sein, dass er eines der vorgeschlagenen Verfahren ausführt und/oder ausführen kann. Vorzugsweise kann jede der vorgeschlagenen Anlagen derart ausgebildet sein und/oder dazu dienen und/oder dafür geeignet sein, dass sie eines der vorgeschlagenen Verfahren ausführt und/oder ausführen kann.

Die Ausführungen und Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in
- FIG. 1: eine bevorzugte Ausführungsform einer elektrischen Anlage mit einer bevorzugten Ausführungsform eines Laststufenschalters;
- FIG. 2a-k: einen Schaltablauf in dem Laststufenschalter;

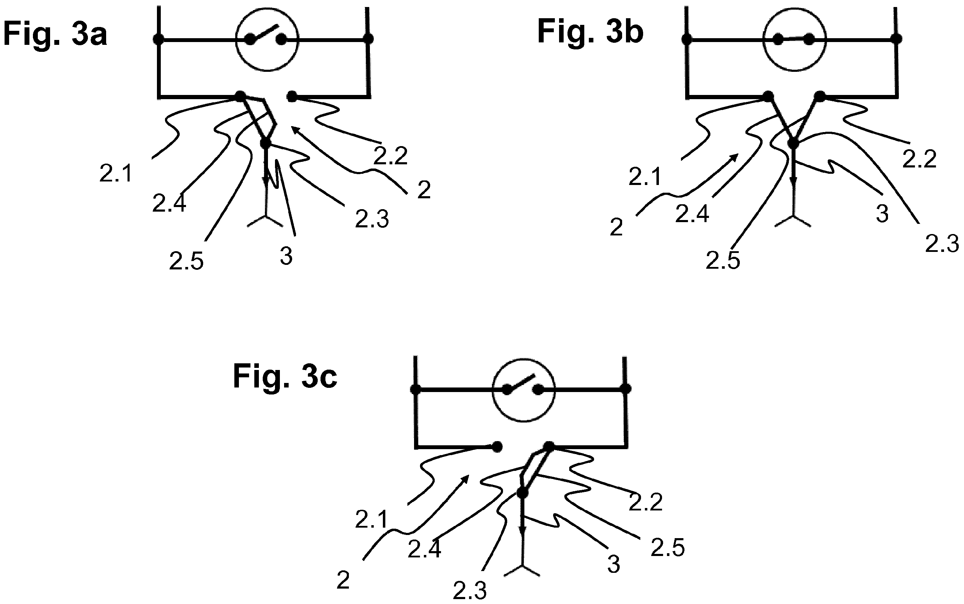

- FIG. 3a-c: einen Schaltablauf eines Umschalters mit einem zweiten Mittelkontakt.

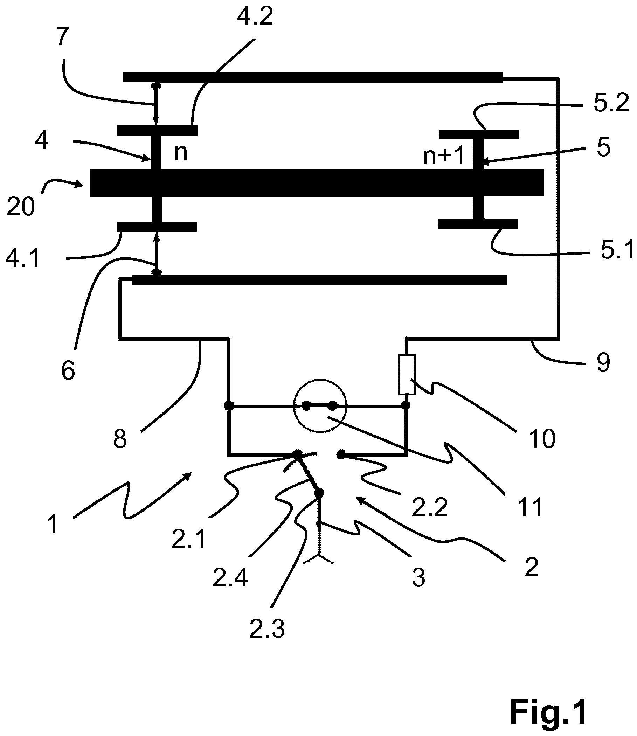

In FIG. 1 ist eine bevorzugte Ausführungsform einer elektrischen Anlage schematisch dargestellt, die beispielhaft einen Regeltransformator bildet und die beispielhaft eine Regelwicklung 20 und einen gemäß einer bevorzugten Ausführungsform ausgebildeten Laststufenschalter 1 zur unterbrechungslosen Umschaltung zwischen Wicklungsanzapfungen n, n+1 der Regelwicklung 20 umfasst. Dieser Laststufenschalter 1 weist einen gemäß einer ersten Ausführungsform ausgebildeten Umschalter 2 mit einem ersten, zweiten und dritten Umschaltkontakt 2.1, 2.2, 2.3 und einem beweglichen Mittelkontakt 2.4, der an eine Lastableitung 3 der Anlage angeschlossen ist, auf. Dieser Umschalter 2 ist als brückender Umschalter 2 ausgebildet. Der Umschalter 2 kontaktiert in einer ersten Stellung den ersten Umschaltkontakt 2.1, in einer zweiten Stellung den zweiten Umschaltkontakt 2.2 und in einer Brückungsstellung beide Umschaltkontakte 2.1, 2.2. Dabei verbindet dieser in der ersten Stellung den erste und dritte Umschaltkontakt 2.1, 2.3, in der zweiten Stellung den zweiten und dritten Umschaltkontakt 2.2, 2.3 und in der Brückungsstellung den ersten, zweiten und dritten Umschaltkontakt 2.1, 2.2, 2.3.

Zwei der Festkontakte 4, 5 sind an eine zugeordnete Wicklungsanzapfung n, n+1 angeschlossen. Dabei ist die Anzahl der Festkontakte von der Anzahl der Wicklungsanzapfungen abhängig. Jeder Festkontakt 4, 5 weist mindestens zwei Kontaktflächen 4.1, 4.2, 5.1, 5.2 auf. Weiterhin weist der Laststufenschalter 1 wenigstens zwei Bewegtkontakte 6, 7 auf, von denen jeder wahlweise wenigstens einen der Festkontakte 4, 5 kontaktieren kann. Dabei ist die erste Kontaktfläche 4.1, 5.1 stets dem ersten Bewegtkontakt 6 und die zweite Kontaktfläche 4.2, 5.2 stets dem zweiten Bewegtkontakt 7 zugeordnet.

Ein Hauptzweig 8 verbindet den ersten Bewegtkontakt 6 mit dem ersten Umschaltkontakt 2.1. Ein Hilfszweig 9 verbindet den zweiten Bewegtkontakt 7 mit dem zweiten Umschaltkontakt 2.2 über ein strombegrenzendes Element 10. Dabei kann das strombegrenzende Element 10 als Widerstand, Induktivität (Spule) oder Varistor ausgebildet ist. Über ein Schaltelement 11, das zwischen dem Hauptzweig 8 und dem zweiten Umschaltkontakt 2.2 (zwischen dem strombegrenzenden Element 10 und dem zweiten Umschaltkontakt 2.2) geschaltet ist, können der Hauptzweig 8 und der Hilfszweig 9 miteinander verbunden werden. Das Schaltelement 11 ist vorzugsweise als Vakuumschaltröhre ausgebildet.

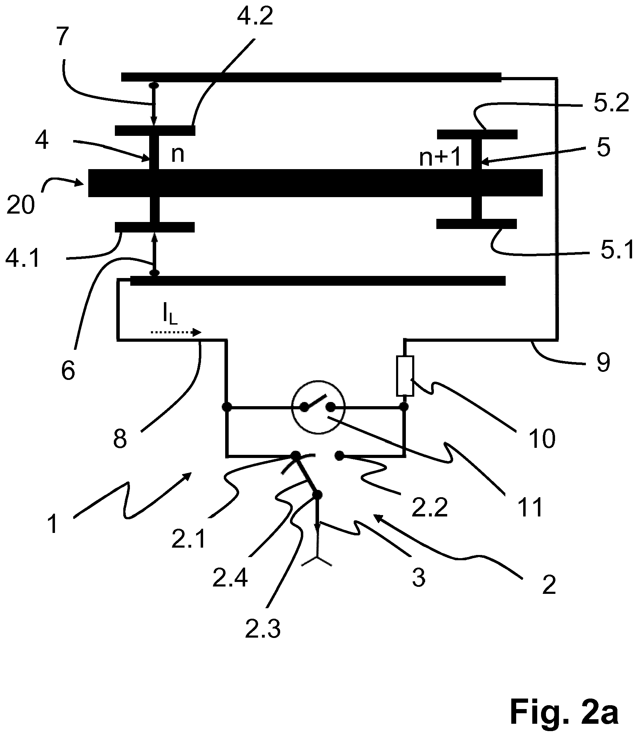

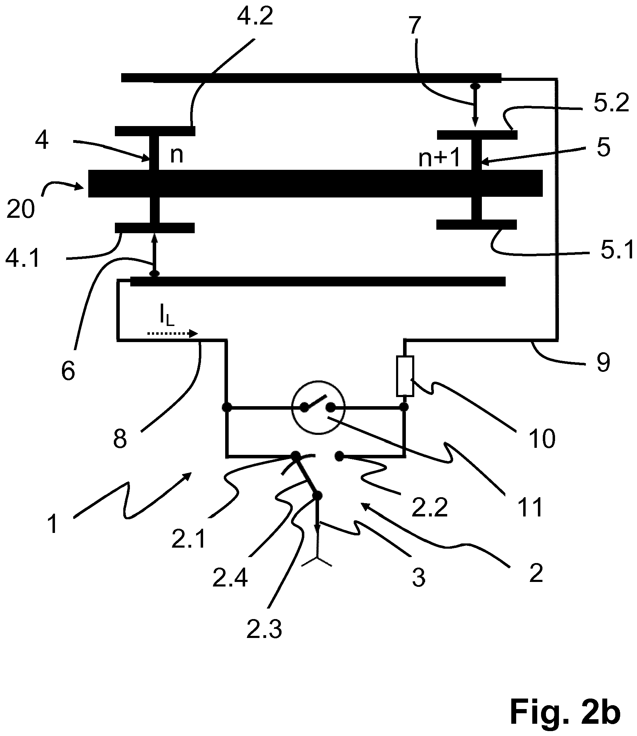

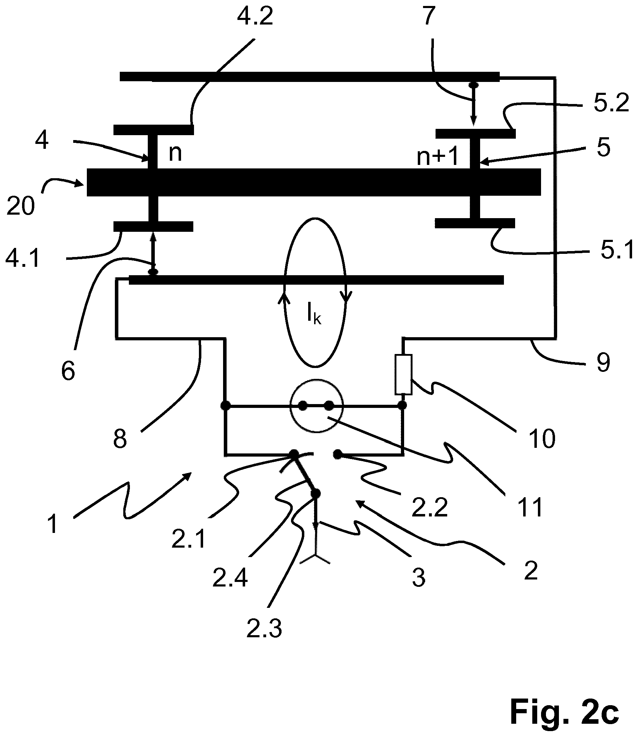

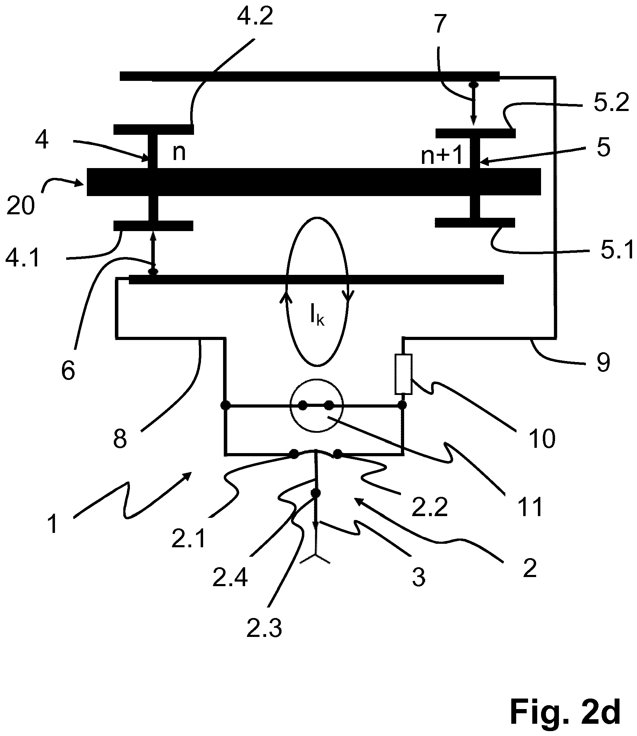

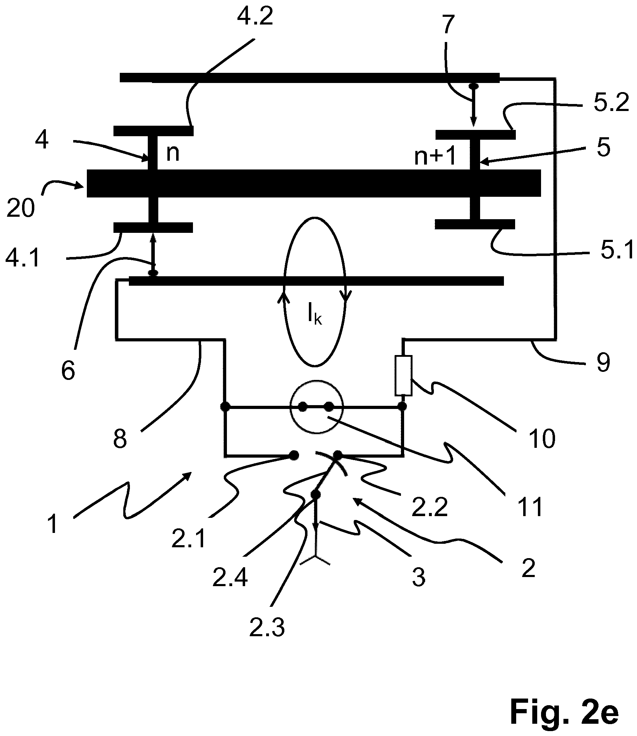

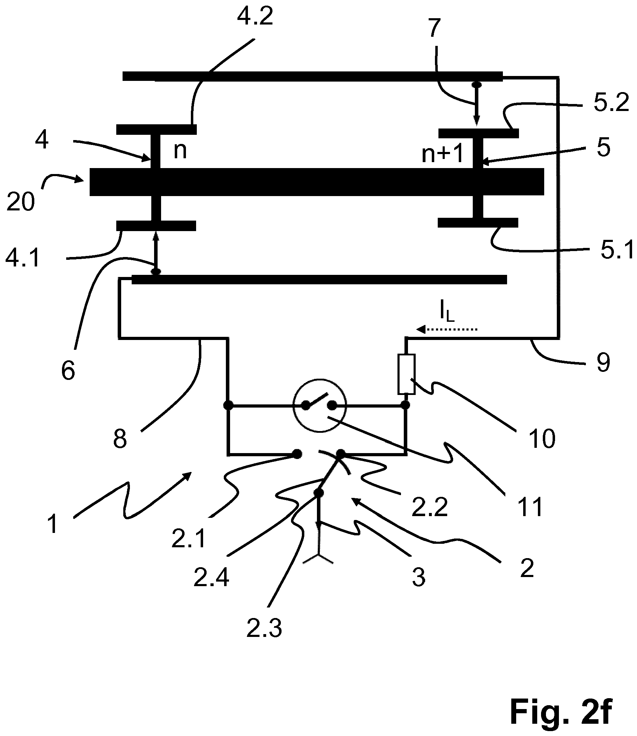

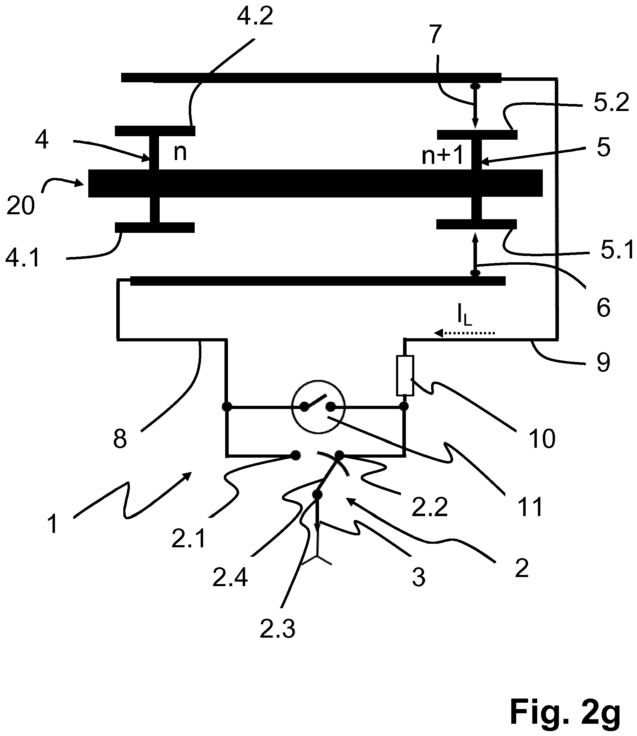

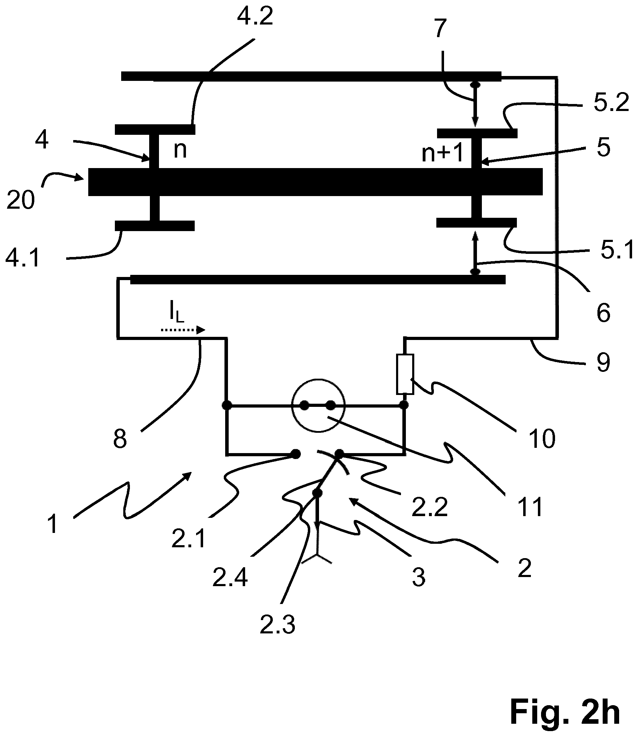

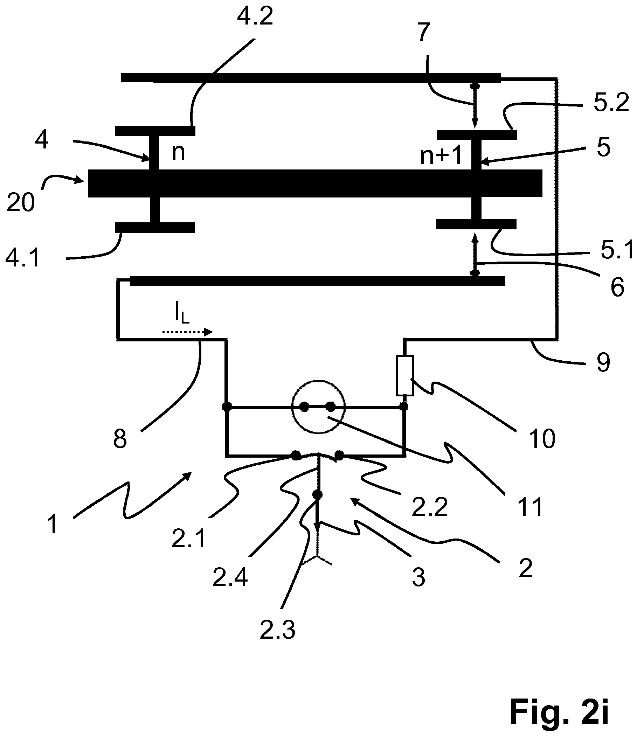

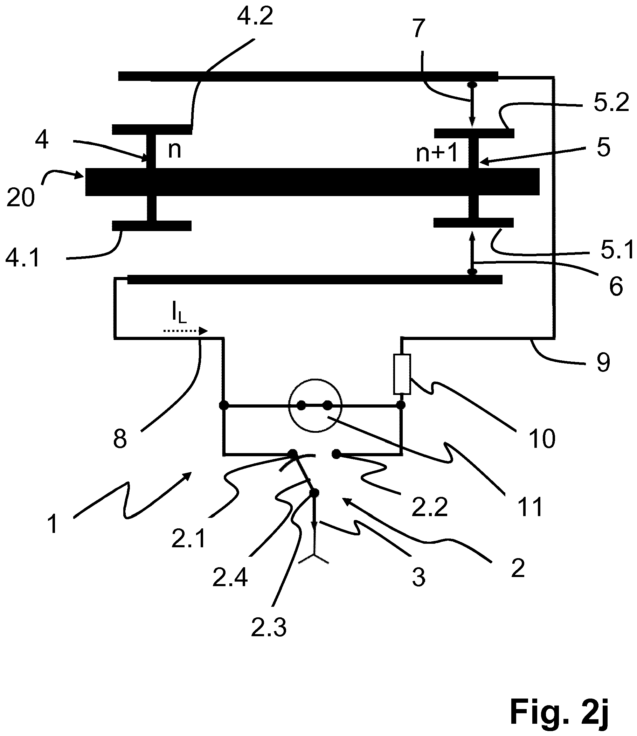

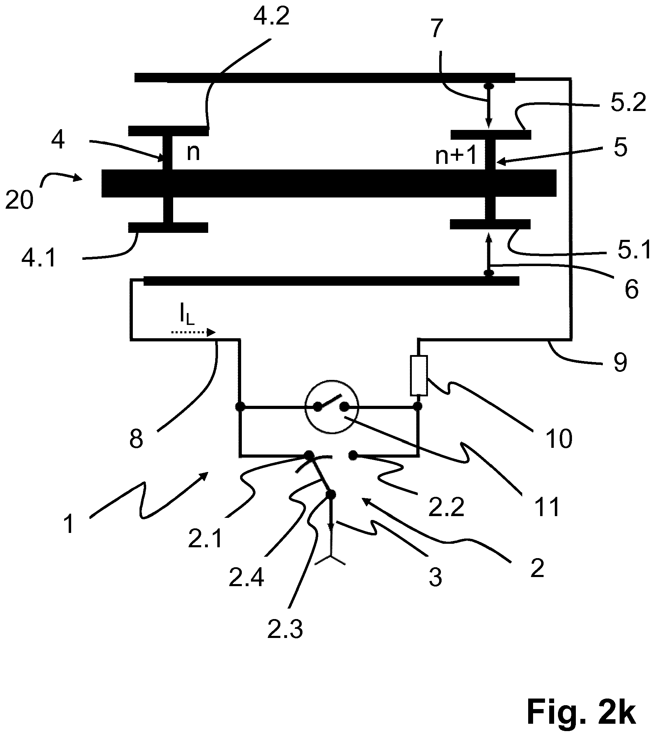

In FIG. 2a bis 2k wird eine bevorzugte Ausführungsform eines Schaltablaufs des Laststufenschalters 1 beschrieben.

In einem Schritt a wird das Schaltelement 11 geöffnet oder bleibt offen. Der Umschalter 2 nimmt dabei eine erste Stellung ein, in der der Mittelkontakt 2.4 den ersten Umschaltkontakt 2.1 kontaktiert, wie in FIG°2a dargestellt ist. Der Laststrom I_{L} fließt hier von der Wicklungsanzapfung n über den Hauptzweig 8, also über Festkontakt 4 und den Bewegtkontakt 6, zum Umschalter 2 und damit zur Lastableitung 3.

In einem Schritt b wird der zweite Bewegtkontakt 7 vom ersten Festkontakt 4 getrennt bis dieser den zweiten Festkontakt 5 kontaktiert, wie in FIG°2b dargestellt ist.

In einem Schritt c wird das Schaltelement 11 geschlossen und der Hilfszweig 9, der den zweiten Bewegtkontakt 7 mit dem zweiten Umschaltkontakt 2.2 über ein strombegrenzendes Element 10 verbindet, mit dem Hauptzweig 8, der den ersten Bewegtkontakt 6 mit dem ersten Umschaltkontakt 2.1 verbindet, über das Schaltelement 11 verbunden, wie in FIG°2c dargestellt ist. Da nun zwei unterschiedliche Wicklungsanzapfungen n und n+1 elektrisch leitend verbunden sind, entsteht ein Kreisstrom Iₖ der über das strombegrenzende Element 10 begrenzt wird.

In einem Schritt d wird der Umschalter 2 in eine Brückungsstellung geschaltet, in der der Mittelkontakt 2.3 beide Umschaltkontakte 2.1, 2.2 kontaktiert, wie in FIG°2d dargestellt ist.

In einem Schritt e wird der Umschalter 2 in eine zweite Stellung geschaltet, in der der Mittelkontakt 2.3 den zweiten Umschaltkontakt 2.2 kontaktiert, wie in FIG°2e dargestellt ist.

In einem Schritt f wird das Schaltelement 11 geöffnet und der Hilfszweig 9 vom Hauptzweig 8 durch das Schaltelement 11, wie in FIG°2f dargestellt ist, getrennte. Hier wird der Kreisstrom I_{K} unterbrochen. Der Laststrom I_{L} fließt nun von der Wicklungsanzapfung n+1 über den Hilfszweig 9, also über Festkontakt 5 und den Bewegtkontakt 7, zum Umschalter 2 und damit zur Lastableitung 3.

In einem Schritt g wird der erste Bewegtkontakt 6 vom ersten Festkontakt 4 getrennt und mit dem zweiten Festkontakt 5 kontaktiert, wie in FIG°2g dargestellt ist.

In einem Schritt h wird das Schaltelement 11 geschlossen und der Hilfszweig 9 mit dem Hauptzweig 8 über das Schaltelement 11 verbunden, wie in FIG°2h dargestellt ist.

Der Laststrom I_{L} fließt nun von der Wicklungsanzapfung n+1 über den Hauptzweig 8, also über Festkontakt 5 und den Bewegtkontakt 6, über das Schaltelement 11 zum Umschalter 2 und damit zur Lastableitung 3.

In einem Schritt i wird der Umschalter 2 in die Brückungsstellung geschaltet, wie in FIG°2i dargestellt ist.

In einem Schritt j wird der Umschalter 2 in die erste Stellung geschaltet; wie in FIG°2j dargestellt ist. Der Laststrom I_{L} fließt nun von der Wicklungsanzapfung n+1 über den Hauptzweig 8, also über Festkontakt 5 und den Bewegtkontakt 6, zum Umschalter 2 und damit zur Lastableitung 3.

In einem Schritt k, der nach Schritt j erfolgt, wird das Schaltelement 11 geöffnet.

Da das Schaltelement 11 vorzugsweise als Vakuumschaltröhre ausgebildet ist, ist es vorteilhaft, dass dieser im stationären Zustand geschlossen ist. Um eine Vakuumschaltröhre offen zu halten ist eine entsprechende Offenhaltekraft aufzubringen. Wenn die Vakuumschaltröhre im stationären Zustand geschlossen wird, ist sichergestellt, dass die Betätigungsmechanik der Vakuumschaltröhre mechanisch nicht belastet wird.

In FIG.°3a bis 3c ist ein gemäß einer zweiten Ausführungsform ausgebildeten Umschalter 2 schematisch dargestellt. Bei dieser Ausführungsform umfasst der Umschalter 2 zwei bewegliche Mittelkontakte 2.4, 2.5, die mit dem dritten Umschaltkontakt 2.3 verbunden sind. Dabei wird die Brückungsstellung, wie in FIG.°3b dargestellt, dadurch erreicht, dass der erste Mittelkontakt 2.4 den ersten Umschaltkontakt 2.1 und der zweite Mittelkontakt 2.5 den zweiten Umschaltkontakt 2.2 kontaktiert.

### BEZUGSZEICHEN

- 1: Laststufenschalter
- 2: Umschalter
- 2.1/2.2/2.3: erster/zweiter/dritter Umschaltkontakt von 2
- 2.4/2.5: erster/zweiter beweglicher Mittelkontakt von2
- 4: Festkontakte
- 4.1/4.2: erste /zweite Kontaktfläche von 4
- 5: Festkontakte
- 5.1/5.2: erste/zweite Kontaktfläche von 5
- 6: erster Bewegtkontakt
- 7: zweiter Bewegtkontakt
- 8: Hauptzweig
- 9: Hilfszweig
- 10: strombegrenzendes Element
- 11: Schaltelement
- 20: Regelwicklung
- n, n+1: Wicklungsanzapfung

## Patentansprüche

1. Laststufenschalter (1) zur unterbrechungslosen Umschaltung zwischen Wicklungsanzapfungen (n, n+1) einer Regelwicklung (20), umfassend
- einen Umschalter (2), der einen ersten Umschaltkontakt (2.1), einen zweiten Umschaltkontakt (2.2) und einen dritten Umschaltkontakt (2.3) umfasst und eine erste Stellung, in der der erste und dritte Umschaltkontakt (2.1, 2.3) verbunden sind, eine zweite Stellung, in der der zweite und dritte Umschaltkontakt (2.2, 2.3) verbunden sind, und eine Brückungsstellung einnehmen kann, in der die Umschaltkontakte (2.1, 2.2, 2.3) verbunden sind;
- einen ersten Festkontakt (4), der an eine zugeordnete erste Wicklungsanzapfung (n) angeschlossen werden kann;
- einen zweiten Festkontakt (5), der an eine zugeordnete zweite Wicklungsanzapfung (n+1) angeschlossen werden kann;
- einen ersten Bewegtkontakt (6), der wahlweise jeden der Festkontakte (4, 5) kontaktieren kann;
- einen zweiten Bewegtkontakt (7), der wahlweise jeden der Festkontakte (4, 5) kontaktieren kann;
- einen Hauptzweig (8), der den ersten Bewegtkontakt (6) direkt mit dem ersten Umschaltkontakt (2.1) verbindet,
- einen Hilfszweig (9), der den zweiten Bewegtkontakt (7) über ein strombegrenzendes Element (10), das als Widerstand ausgebildet ist, mit dem zweiten Umschaltkontakt (2.2) verbindet;
- ein Schaltelement (11), das zwischen den Hauptzweig (8) und den zweiten Umschaltkontakt (2.2) geschaltet ist
- wobei
- die Bewegtkontakte (6, 7) unabhängig voneinander betätigbar sind

2. Laststufenschalter (1) nach dem vorigen Anspruch, wobei
- der Umschalter (2) als brückender Umschalter ausgebildet ist und einen beweglichen ersten Mittelkontakt (2.4) umfasst, der mit dem dritten Umschaltkontakt (2.3) verbunden ist;
- in der ersten Stellung der Mittelkontakt (2.4) den ersten Umschaltkontakt (2.1) kontaktiert, in der zweiten Stellung der Mittelkontakt (2.4) den zweiten Umschaltkontakt (2.2) kontaktiert und in der Brückungsstellung der Mittelkontakt (2.4) den ersten und zweiten Umschaltkontakt (2.1, 2.2) kontaktiert.

3. Laststufenschalter (1) nach einem der vorigen Ansprüche, wobei
- der Umschalter (2) einen beweglichen ersten Mittelkontakt (2.4), der mit dem dritten Umschaltkontakt (2.3) verbunden ist, und einen beweglichen zweiten Mittelkontakt (2.5) umfasst, der mit dem dritten Umschaltkontakt (2.3) verbunden ist;
- in der ersten Stellung der erste und/oder zweite Mittelkontakt (2.4, 2.5) den ersten Umschaltkontakt (2.1) kontaktiert, in der zweiten Stellung der zweite und/oder erste Mittelkontakt (2.5, 2.4) den zweiten Umschaltkontakt (2.2) kontaktiert und in der Brückungsstellung der erste Mittelkontakt (2.4, 2.5) den ersten Umschaltkontakt (2.1) und der zweite Mittelkontakt (2.4, 2.5) den zweiten Umschaltkontakt (2.2) kontaktiert.

4. Laststufenschalter (1) nach einem der vorigen Ansprüche, wobei
- jeder Festkontakt (4, 5) zwei Kontaktflächen (4.1, 4.2, 5.1, 5.2) aufweist,
- bei jedem Festkontakt (4, 5) die erste Kontaktfläche (4.1, 5.1) dem ersten Bewegtkontakt (6) und die zweite Kontaktfläche (4.2, 5.2) dem zweiten Bewegtkontakt (7) zugeordnet ist.

5. Verfahren zur Betätigung eines Laststufenschalters (1), der einen ersten und zweiten Bewegtkontakt (6, 7) und einen ersten und zweiten Festkontakt (4, 5) umfasst und der gemäß einem der vorigen Ansprüche ausgebildet ist, wobei
- von einem ersten stationären Zustand, in dem die Bewegtkontakte (6, 7) den ersten Festkontakt (4) kontaktieren, zu einem zweiten stationären Zustand, in dem die Bewegtkontakte (6, 7) den zweiten Festkontakt (5) kontaktieren, umgeschaltet wird.

6. Verfahren nach dem vorigen Anspruch, wobei
- der zweite Bewegtkontakt (7) von dem ersten Festkontakt (4) getrennt und mit dem zweiten Festkontakt (5) kontaktiert wird;
- ein Laststrom (I_{L}) von einem Hauptzweig (8) auf einen Hilfszweig (9) umgeschaltet wird;
- der erste Bewegtkontakt (6) von dem ersten Festkontakt (4) getrennt und mit dem zweiten Festkontakt (5) kontaktiert wird.

7. Verfahren nach einem der vorigen Ansprüche 5 oder 6, wobei
- der erste Bewegtkontakt (6) von dem ersten Festkontakt (4) getrennt und mit dem zweiten Festkontakt (5) kontaktiert wird;
- ein Laststrom (I_{L}) von einem Hilfszweig (9) auf einen Hauptzweig (8) umgeschaltet wird;
- der zweite Bewegtkontakt (7) von dem ersten Festkontakt (4) getrennt und mit dem zweiten Festkontakt (5) kontaktiert wird.

8. Verfahren nach einem der vorigen Ansprüche 5 bis 7, wobei
- das Umschalten des Laststroms (I_{L}) mittels eines Umschalters (2) und eines Schaltelements (11) erfolgt;
- der Umschalter (2) nur dann betätigt wird, wenn das Schaltelement (11) geschlossen ist.

9. Verfahren nach dem vorigen Anspruch, wobei
- der Umschalter (2) einen ersten Umschaltkontakt (2.1), einen zweiten Umschaltkontakt (2.2) und einen dritten Umschaltkontakt (2.3) umfasst und eine erste Stellung, in der der erste und dritte Umschaltkontakt (2.1, 2.3) verbunden sind, eine zweite Stellung, in der der zweite und dritte Umschaltkontakt (2.2, 2.3) verbunden sind, und eine Brückungsstellung einnehmen kann, in der die Umschaltkontakte (2.1, 2.2, 2.3) verbunden sind;
- vor dem Bewegen des ersten Bewegtkontaktes (6) das Schaltelement (11) geöffnet wird und der Umschalter (2) die zweite Stellung einnimmt und/oder vor dem Bewegen des zweiten Bewegtkontaktes (7) das Schaltelement (11) geöffnet wird und der Umschalter (2) die erste Stellung einnimmt.

10. Verfahren nach einem der vorigen Ansprüche 5 bis 9, wobei
- in einem Schritt a) das Schaltelement (11) offen ist und der Umschalter (2) die erste Stellung einnimmt;
- in einem Schritt b) der zweite Bewegtkontakt (7) vom ersten Festkontakt (4) getrennt und mit dem zweiten Festkontakt (5) kontaktiert wird;
- in einem Schritt c) das Schaltelement (11) geschlossen wird und der Hilfszweig (9), der den zweiten Bewegtkontakt (7) über ein strombegrenzendes Element (10) mit dem zweiten Umschaltkontakt (2.2) verbindet, über das Schaltelement (11) mit dem Hauptzweig (8), der den ersten Bewegtkontakt (6) mit dem ersten Umschaltkontakt (2.1) verbindet, verbunden wird;
- in einem Schritt d) der Umschalter (2) in die Brückungsstellung geschaltet wird;
- in einem Schritt e) der Umschalter (2) in die zweite Stellung geschaltet wird;
- in einem Schritt f) das Schaltelement (11) geöffnet wird und der Hilfszweig (9) durch das Schaltelement (11) vom Hauptzweig (8) getrennt wird;
- in einem Schritt g) der erste Bewegtkontakt (6) vom ersten Festkontakt (4) getrennt und mit dem zweiten Festkontakt (5) kontaktiert wird;
- in einem Schritt h) das Schaltelement (11) geschlossen wird und der Hilfszweig (9) über das Schaltelement (11) mit dem Hauptzweig (8) verbunden wird;
- in einem Schritt i) der Umschalter (2) in die Brückungsstellung geschaltet wird;
- in einem Schritt j) der Umschalter (2) in die erste Stellung geschaltet wird.

11. Verfahren nach dem vorigen Anspruch, wobei
- in einem Schritt k) nach Schritt j das Schaltelement (11) geöffnet wird.

12. Elektrische Anlage, umfassend
- eine Regelwicklung (20);
- einen Laststufenschalter (1), der an die Regelwicklung (20) angeschlossen ist und gemäß einem der vorigen Ansprüche 1 bis 4 ausgebildet ist.

## Claims

1. On-load tap changer (1) for uninterrupted switching over between winding taps (n, n+1) of a regulating winding (20), comprising
- a changeover switch (2) which comprises a first changeover contact (2.1), a second changeover contact (2.2) and a third changeover contact (2.3) and which can adopt a first setting in which the first and third changeover contacts (2.1, 2.3) are connected, a second setting in which the second and third changeover contacts (2.2, 2.3) are connected and a bridging setting in which the changeover contacts (2.1, 2.2, 2.3) are connected;
- a first fixed contact (4) which can be connected with an associated first winding tap (n);
- a second fixed contact (5) which can be connected with an associated second winding tap (n+1);
- a first moved contact (6) which can selectably contact each of the fixed contacts (4, 5)
- a second moved contact (7) which can selectably contact each of the fixed contacts (4, 5);
- a main branch (8) which directly connects the first moved contact (6) with the first changeover contact (2.1);
- an auxiliary branch (9) which connects the second moved contact (7) with the second changeover contact (2.2) by way of a current-limiting element (10) which is constructed as a resistor; and
- a switching element which is connected between the main branch (8) and the second changeover contact (2.2)
wherein
- the moved contacts (6, 7) are actuable independently of one another.

2. On-load tap changer (1) according to the preceding claim, wherein
- the changeover switch (2) is formed as a bridging changeover switch and comprises a movable first middle contact (2.4) connected with the third changeover contact (2.3); and
- in the first setting the middle contact (2.4) contacts the first changeover contact (2.1), in the second setting the middle contact (2.4) contacts the second changeover contact (2.2) and in the bridging setting the middle contact (2.4) contacts the first and second changeover contacts (2.1, 2.2).

3. On-load tap changer (1) according to one of the preceding claims, wherein
- the changeover switch (2) comprises a movable first middle contact (2.4) which is connected with the third changeover contact (2.3) and a movable second middle contact (2.5) which is connected with the third changeover contact (2.3); and
- in the first setting the first and/or second middle contact (2.4, 2.5) contacts the first changeover contact (2.1), in the second setting the second and/or first middle contact (2.5, 2.4) contacts the second changeover contact (2.2) and in the bridging setting the first middle contact (2.4, 2.5) contacts the first changeover contact (2.1) and the second middle contact (2.4, 2.5) contacts the second changeover contact (2.2).

4. On-load tap changer (1) according to any one of the preceding claims, wherein
- each fixed contact (4, 5) has two contact surfaces (4.1, 4.2, 5.1, 5.2); and
- at each fixed contact (4, 5) the first contact surface (4.1, 4.5) is associated with the first moved contact (6) and the second contact surface (4.2, 5.2) is associated with the second moved contact (7).

5. Method of actuating an on-load tap changer (1) which comprises a first and a second moved contact (6, 7) and a first and a second fixed contact (4, 5) and which is constructed in accordance with any one of the preceding claims, wherein
- switching over takes place from a first stationary state in which the moved contacts (6, 7) contact the first fixed contact (4) to a second stationary state in which the moved contacts (6, 7) contact the second fixed contact (5).

6. Method according to the preceding claim, wherein
- the second moved contact (7) is separated from the first fixed contact (4) and is contacted by the second fixed contact (5);
- a load current (I_{L}) is switched over from a main branch (8) to an auxiliary branch (9); and
- the first moved contact (6) is separated from the first fixed contact (4) and is contacted by the second fixed contact (5).

7. Method according to one of the preceding claims 5 or 6, wherein
- the first moved contact (6) is separated from the first fixed contact (4) and is contacted by the second fixed contact (5);
- a load current (I_{L}) is switched over from an auxiliary branch (9) to a main branch (8); and
- the second moved contact (7) is separated from the first fixed contact (4) and is contacted by the second fixed contact (5).

8. Method according to any one of the claims 5 to 7, wherein
- the switching-over of the load current (I_{L}) is carried out by means of a changeover switch (2) and a switching element (11); and
- the changeover switch (2) is actuated only when the switching element (11) is closed.

9. Method according to the preceding claim, wherein
- the load changeover switch (2) comprises a first changeover contact (2.1), a second changeover contact (2.2) and a third changeover contact (2.3) and can adopt a first setting in which the first and third changeover contacts (2.1, 2.3) are connected, a second setting in which the second and third changeover contacts (2.2, 2.3) are connected and a bridging setting in which the changeover contacts (2.1, 2.2, 2.3) are connected; and
- prior to movement of the first moved contact (6) the switching element (11) is opened and the changeover switch (2) adopts the second setting and/or prior to movement of the second moved contact (7) the switching element (11) is opened and the changeover switch (2) adopts the first setting.

10. Method according to any one of the claims 5 to 9, wherein
- in a step a the switching element (11) is open and the changeover switch (2) adopts the first setting;
- in a step b the second moved contact (7) is separated from the first fixed contact (4) and is contacted by the second fixed contact (5);
- in a step c the switching element (11) is closed and the auxiliary branch (9) connecting the second moved contact (7) with the second changeover contact (2.2) by way of a current-limiting element (10) is connected by way of the switching element (11) with the main branch (8), which connects the first moved contact (6) with the first changeover contact (2.1);
- in a step d the changeover switch (2) is switched to the bridging setting;
- in a step e the changeover switch (2) is switched to the second setting;
- in a step f the switching element (11) is opened and the auxiliary branch (9) is separated from the main branch (8) by the switching element (11);
- in a step g the first moved contact (6) is separated from the first fixed contact (4) and is contacted by the second fixed contact (5);
- in a step h the switching element (11) is closed and the auxiliary branch (9) is connected with the main branch (8) by way of the switching element (11);
- in a step i the changeover switch (2) is switched to the bridging setting; and
- in a step j the changeover switch (2) is switched to the first setting.

11. Method according to the preceding claim, wherein
- in a step k after step j the switching element (11) is opened.

12. Electrical installation comprising
- a regulating winding (20); and
- an on-load tap changer (1) which is connected with the regulating winding (20) and constructed in accordance with any one of the claims 1 to 4.

## Revendications

1. Changeur de prises en charge (1) pour commuter sans coupure entre des prises d'environnement (n, n+1) d'un enroulement de réglage (20) comprenant :
- un commutateur (2) ayant un premier contact de commutation (2.1), un second contact de commutation (2.2) et un troisième contact de commutation (2.3) et qui peut prendre une première position dans laquelle le premier et le troisième contact de commutation (2.1, 2.3) sont reliés, une seconde position dans laquelle le second et le troisième contact de commutation (2.2, 2.3) sont reliés et une position de pont dans laquelle les contacts de commutation (2.1, 2.2, 2.3) sont reliés ;
- un premier contact fixe (4) qui peut être relié à une première prise d'enroulement (n) correspondante ;
- un second contact fixe (5) qui peut être relié une seconde prise d'enroulement (n+1) ;
- un premier contact mobile (6) qui peut contacter sélectivement chacun des contacts fixes (4, 5) ;
- un second contact mobile (7) qui peut contacter sélectivement chacun des contacts fixes (4, 5) ;
- une branche principale (8) reliant directement le premier contact mobile (6) au premier contact de commutation (2.1) ;
- une branche auxiliaire (9) reliant le second contact mobile (7) par un élément de limitation de courant (10) en forme de résistance au second contact de commutation (2.2) ;
- un élément de commutation (11) entre la branche principale (8) et le second contact de commutation (2.2) ;
dans lequel
- les contacts mobiles (6, 7) sont actionnés indépendamment l'un de l'autre.

2. Changeur de prises en charge (1) selon la revendication précédente,
selon lequel
- le commutateur (2) est un commutateur de pont comprenant un premier contact intermédiaire (2.4), relié au troisième contact de commutation (2.3) ;
- dans sa première position le contact intermédiaire (2.4) est en contact avec le premier contact de commutation (2.1), dans sa seconde position le contact intermédiaire (2.4) est en contact le second contact de commutation (2.2) et dans la position de pont du commutateur intermédiaire (2.4) il est en contact avec le premier et le second contact de commutation (2.1, 2.2).

3. Changeur de prises en charge (1) selon l'une des revendications précédentes,
selon lequel
- le commutateur (2) a un premier contact intermédiaire (2.4) mobile, relié au troisième contact de commutation (2.3) et un second contact intermédiaire, mobile (2.5) relié au troisième contact de commutation (2.3) ;
- dans la première position, le premier ou/le second contact intermédiaires (2.4, 2.5) sont en contact avec le premier contact de commutation (2.1), dans la seconde position de commutation, le second et/ou premier contact intermédiaires (2.5, 2.4) sont en contact avec le second contact de commutation (2.2) et dans la position de pont, le premier contact intermédiaire (2.4, 2.5) est en contact avec le premier contact de commutation (2.1) et le second contact intermédiaire (2.4, 2.5) avec le second contact de commutation (2.2).

4. Changeur de prises en charge (1) selon l'une des revendications précédentes,
selon lequel
- chaque contact fixe (4, 5) a deux surfaces de contact (4.1, 4.2, 5.1, 5.2) ;
- pour chaque contact fixe (4.5), la première surface de contact (4.1, 5.1) est associée au premier contact mobile (6) et la seconde surface de contact (4.2, 5.2) est associée au second contact mobile (7).

5. Procédé d'actionnement d'un changeur de prises en charge (1) comportant un premier et un second contact mobile (6, 7) et un premier et un second contact fixe (4, 5), réalisé selon l'une des revendications précédentes,
selon lequel
- on commute d'un premier état stationnaire dans lequel les contacts mobiles (6,7) sont en contact avec le premier contact fixe (4) vers un second état stationnaire dans lequel les contacts mobiles (6, 7) sont en contact avec le second contact fixe (5).

6. Procédé selon la revendication précédente,
selon lequel
- le second contact mobile (7) est séparé du premier contact fixe (4) et il est mis en contact avec le second contact fixe (5) ;
- un courant de charge (I_{L}) est commuté d'une branche principale (8) à une branche auxiliaire (9) ;
- on sépare le premier contact mobile (6) du premier contact fixe (4) et on le met en contact avec le second contact fixe (5).

7. Procédé selon l'une des revendications 5 ou 6,
selon lequel
- on sépare le premier contact mobile (6) du premier contact fixe (4) et on le met en contact avec le second contact fixe (5) ;
- on commute un courant de charge (I_{L}) d'une première branche auxiliaire (9) sur une branche principale (8) ;
- on sépare le second contact mobile (7) du premier contact fixe (4) et on le met en contact avec le second contact fixe (5).

8. Procédé selon l'une des revendications 5 à 7,
selon lequel
- on commute le courant de charge (I_{L}) à l'aide d'un commutateur (2) et d'un élément de commutation (11) ; et
- le commutateur (2) ne sera actionné que si l'élément de commutation (11) est fermé.

9. Procédé selon la revendication précédente,
selon lequel
- le commutateur (2) a un premier contact de commutation (2.1) un second contact de commutation (2.2) et un troisième contact de commutation (2.3) et il peut prendre une première position dans laquelle le premier et le troisième contact de commutation (2.1, 2.3) sont reliés, une seconde position dans laquelle le second et le troisième contact de commutation (2.2, 2.3) sont reliés et une position de pont dans laquelle les contacts de commutation (2.1, 2.2, 2.3) sont reliés ;
- avant de déplacer le premier contact mobile (6) on ouvre l'élément de commutation (11) et le commutateur (2) prend la seconde position et/ou avant de déplacer le second contact mobile (7), on ouvre l'élément de commutation (11) et le commutateur (2) prend la première position.

10. Procédé selon l'une des revendications 5 à 9,
selon lequel
- dans une étape a) l'élément de commutation (11) est ouvert et le commutateur (2) prend la première position ;
- dans une étape b), le second contact mobile (6) est séparé du premier contact fixe (4) et mis en contact avec le second contact fixe (5) ;
- dans une étape c), on ferme l'élément de commutation (11) et on relie la branche auxiliaire (9) qui relie le second contact mobile (7) par l'intermédiaire d'un élément de limitation de courant (10) au second contact de commutation (2.2), par l'élément de commutation (11) avec la branche principale (8) que relie le premier contact mobile (6) au premier contact de commutation (2.1) ;
- dans une étape d) on commute le commutateur (2) dans la position de pont ;
- dans une étape e) on commute le commutateur (2) dans la seconde position ;
- dans une étape f) on ouvre l'élément de commutation (11) et on sépare la branche auxiliaire (9) de la branche principale (8) à l'aide de l'élément de commutation (11) ;
- dans une étape g) on sépare le premier contact mobile (6) du premier contact fixe (4) et on le met en contact avec le second contact fixe (5) ;
- dans une étape h) on ferme l'élément de commutation (11) et on relie la branche auxiliaire (9) à la branche principale (8) par l'intermédiaire de l'élément de commutation (11) ;
- dans une étape i) on commute le commutateur (2) dans la position de pont ;
- dans l'étape j) on commute le commutateur (2) dans la première position.

11. Procédé selon la revendication précédente,
selon lequel
- dans l'étape k) après l'étape j) on ouvre l'élément de commutation (11).

12. Installation électrique comprenant
- un enroulement de réglage (20) ; et
- un changeur de prises en charge (1) relié à l'enroulement de réglage (20) et réalisé selon l'une des revendications 1 à 4 précédente.
